# FASCICULE DE BREVET EUROPEEN

(11) **EP 2 201 193 B1**
(45) Date de publication et mention de la délivrance du brevet: **30.03.2011**
(21) Numéro de dépôt: 08869017.7
(22) Date de dépôt: 07.10.2008
(51) Int. Cl.: E04D 11/00, A01G 9/02, A01G 1/00

(54) **DALLE DE TERREAU POUR LA CROISSANCE DE VÉGÉTAUX**
PLATTE ZUM EINTOPFEN VON KOMPOST ZUR PFLANZENZÜCHTUNG
SLAB OF POTTING COMPOST FOR GROWING PLANTS

(30) Priorité: 08.10.2007 FR 0707050
(43) Date de publication de la demande: 30.06.2010
(73) Titulaire: Jacobs, Mathieu, 30 rue Paul Vaillant Couturier 92140 Clamart (FR)
(72) Inventeur: Jacobs, Mathieu, 30 rue Paul Vaillant Couturier 92140 Clamart (FR)
(74) Mandataire: Icosa
(86) Numéro de dépôt international: PCT/FR2008/001400
(87) Numéro de publication internationale: WO 2009/083662

(56) Documents cités:
- DE-A1-102005 063 133
- FR-A- 2 845 563
- FR-A- 2 850 527
- US-A1- 2005 217 168

## Description

L'invention concerne la réalisation de murs végétaux ou de toitures végétalisées , c'est-à-dire la réalisation d'un support recouvert de végétaux, inclinée par rapport à l'horizontale, d'un angle pouvant prendre une valeur arbitraire comprise entre 0° et 180° et notamment d'un mur de végétaux vertical, incliné de 90°.

Une façon de réaliser un tel mur consiste à fixer à la surface inclinée d'un support, une dalle de terreau, c'est-à-dire un volume d'un milieu apte au développement des plantes, dont les dimensions latérales, longueur et largeur, sont nettement plus grandes que l'épaisseur, puis de cultiver des végétaux dans le terreau de la dalle et d'assurer notamment une alimentation en eau suffisante aux végétaux dans la dalle pour permettre leur développement hors de cette dalle.

Or, un problème spécifique à la conception d'une telle dalle en utilisation inclinée est l'auto-portance, c'est-à-dire la capacité de la dalle inclinée à résister, de façon pérenne, à la gravité terrestre et à de fortes variations d'humidité du terreau, imposées par l'arrosage et la consommation d'eau indispensable à la croissance de végétaux.

Pour une dalle de terreau, deux effets mécaniques liés à l'humidité peuvent en effet être anticipés: le craquèlement ou fragilisation macroscopique par solidification du terreau en mottes et le ravinement ou fragilisation microscopique par dilution du terreau dans de l'eau sous forme de boue et son transport par écoulement.

Dans le cas d'une dalle horizontale et d'épaisseur limitée, la fragilisation microscopique et macroscopique oeuvrent déjà à diminuer la durée de vie de la dalle en la fragmentant en mottes de taille de plus en plus réduite par ravinement vers la profondeur de la dalle.

Pour une dalle inclinée, cet effet s'amplifie à mesure que la pente de la dalle augmente. La gravité entraîne aussi un écoulement de la boue par ravinement en surface, qui accélère la destruction de la pellicule de terreau constituant la dalle, en augmentant ses anfractuosités. Il est ainsi connu que l'augmentation de la pente d'une surface cultivable accroît la difficulté d'y cultiver des végétaux. Pour une dalle inclinée, la gravité et les variations d'humidité permettent donc d'anticiper, dans l'art antérieur, un vieillissement rapide qui ne permet pas d'envisager sans risque d'échec, la culture de végétaux en murs.

Le fractionnement de la dalle en mottes de terreau de plus en plus petites semble donc peu maîtrisable, surtout en extérieur.

Pour éviter la chute des mottes le long d'une pente modérée, l'art antérieur propose usuellement une solution de type grillage ou filet disposé à la surface de la dalle et plaquant les mottes sur le support de la dalle, pour les maintenir en place. Toutefois, pour des dalles inclinées, cette solution est impuissante à contrer l'action de la gravité combinée à la fragilisation microscopique qui provoque un ravinement du terreau rapide le long de la dalle. Dès que les mailles du filet deviennent plus grandes que la taille des mottes, la destruction de la dalle ne peut être évitée, surtout pour de fortes inclinaisons ou un fort arrosage.

La destruction d'une dalle de terreau inclinée est donc inévitablement causée par la conjugaison du craquèlement et du ravinement, exacerbés par la gravité et a fortiori en cas de murs extérieurs par l'exposition aux intempéries, pluie, vent ou grêle, qui accélèrent la dégradation de la dalle. Dans l'art antérieur, une solution qui ne résout donc pas simultanément les problèmes de craquèlement et de ravinement des dalles de terreau ne semble donc pas envisageable pour une utilisation inclinée et encore moins pour une utilisation en extérieur de ces dalles.

L'art antérieur connaît par ailleurs pour des utilisations horizontales, des terreaux améliorés par ajout d'un liant, c'est-à-dire d'une colle compatible avec la croissance des végétaux qui permet d'agréger le terreau même humide sous forme d'une motte suffisamment résistante mécaniquement pour permettre la manutention de jeunes plantes par la tige sans désagréger la motte qui entoure leur système de racines. Ces terreaux sont par exemple le terreau « preforma » de la société « Jiffy International» (http://jiffypot.com). Ce type de terreau est utilisé en motte. Sa résistance mécanique ne permet toutefois pas de réaliser des mottes de plus de quelques centimètres de diamètre, sans provoquer le craquèlement de la motte et sa désagrégation en mottes de plus faible taille, à la manière des terreaux classiques. La manutention d'une telle motte pour réaliser un mur de végétaux est donc d'autant plus malaisée et sujette à provoquer des cassures de la motte, que la surface de celle-ci augmente. Un stockage sous forme de rouleau est par exemple inenvisageable et la fixation d'une motte de ce type à un support, problématique en terme de cassure de la motte. Un tel terreau n'est donc pas apte à résoudre simultanément les problèmes de craquèlement et de ravinement pour la réalisation d'une dalle apte à une utilisation inclinée pour la réalisation d'un mur de végétaux.

L'art antérieur connaît aussi des tissus tridimensionnels de fibres espacées entre elles, on citera le produit « Teracro » de Terageos (http://www.terageos.com) ou « Enkamat » de la société « Colbond » (http://www.coibond-geosynthetics.fr)

Ce genre de tissus est essentiellement déformable dans toutes les directions et destiné à recevoir de la terre sur les fibres qui le composent puis à être fixé sur des pentes, avec de nombreuses limitations d'utilisation. Il est notamment souligné par le fabricant lui-même, pour un produit comme le « Teracro » que le système ne s'applique pas sur des pentes au delà de 45°, que la qualité de la terre utilisée doit être adaptée, suffisamment grasse, et qu'un filet de surface peut-être utilisé. Un terreau n'est ainsi pas adapté à un usage sur des surfaces inclinées avec des tissus tridimensionnels. Il est ainsi communément admis dans l'art antérieur, que même en deçà d'une pente de 45 degrés, les tissus tridimensionnels sont entachés de défauts importants non résolus. Ces tissus ne sont donc pas envisageables dans l'art antérieur comme aptes à résoudre simultanément les problèmes de craquèlement et de ravinement de dalles de terreau inclinées, notamment exposées à la pluie, au vent et à la grêle.

Le document DE 102005063133 A1 décrit une dalle de terreau telle que dans le préambule de la revendication 1 et un procédé tel que dans le préambule de la revendication 7 et sert de base à la revendication 8.

Le problème de la réalisation d'une dalle de terreau auto-portante, de dimensions latérales supérieures à un décimètre, pour la croissance de végétaux sur des murs ne semble donc pas résolue dans l'art antérieur, notamment à l'extérieur des bâtiments et en présence d' intempéries. Dans ce contexte, l'invention est définie comme suit :

Description de l'invention :

L'invention est décrite ci-dessous, pour un mode particulier utilisant un tissus en trois dimensions comprenant des fibres espacées, nommé « Enkamat » de la société « Colbond » et un terreau mélangé à un liant fabriqué par la société « Jiffy » sous le nom de «Preforma ». Un terreau de ce type est décrit aussi dans le brevet canadien N° 1046281 intitulé « Growth medium for the cultivation of plants » et accordé à Jiffy products International Ltd.

Dans ce type de terreau, le liant est un bitume, dispersé en émulsion aqueuse puis déposé sur les fibres du terreau par élimination de l'eau. Des mottes de tailles 3 mm à 10 mm conservant leur forme sous arrosage peuvent être réalisées d'après l'enseignement de ce brevet avec de la tourbe. Pour la mise en oeuvre de l'invention, un mélange de terre végétale et de tourbe ou terreau, conduisant à des tailles de mottes différentes, pourra aussi être utilisé.

De même, du caoutchouc dissout dans une solution aqueuse ou de la gélatine animale dissoute dans de l'eau pourraient être utilisés en lieu et place de l'émulsion de bitume.

Des fils de plastiques imputrescibles enchevêtrés ou encore de la laine de verre, pourraient être employés comme fibres pour la réalisation du tissus en trois dimensions.

Pour ce mode particulier de l'invention, le tissu en trois dimensions est collé sur une face d'une toile inextensible dit « non tissé ». Cette toile est poreuse et perméable à l'air et à l'eau et des trous sont pratiqués dans la toile pour permettre l'évacuation rapide de l'eau et de l'air lors de la réalisation de la dalle. Le tissu collé à la toile n'est ainsi pas extensible dans une direction parallèle à la face de la toile.

Le terreau utilisé avec son liant a pour propriété de ne pas se désagréger ni de changer de forme lors d'un arrosage en position horizontale et de permettre le transport d'un jeune plant avec une motte de terreau mélangée au liant qui entoure ses racines, même humide. Il a aussi la propriété de pouvoir être rendu liquide par ajout d'eau avant polymérisation du liant puis résistant à l'eau par évacuation et évaporation de l'eau entraînant la polymérisation du liant.

Dans ce contexte, le terreau comprenant le liant est mélangé à de l'eau pour le rendre liquide ou boueux. Il est ensuite déposé sur le tissus reposant sur la toile et, par gravité, chasse l'air emprisonné, entre la boue et la toile, dans le tissus, au moyen de la porosité et des trous de la toile ainsi que par écoulement par les bords de la toile, pour remplir complètement les interstices du tissus avec le mélange terreau et liant.

Par évacuation de l'eau et séchage, la boue se transforme en terreau lié et enserre les fibres du tissu en formant, grâce à la polymérisation du liant, des mottes de dimensions latérales supérieures aux espaces libres entre les fibres. De cette façon, en cours de séchage, de l'eau peut rester piégée dans le terreau spongieux, à disposition des plantes, pour un usage immédiat des dalles ou l'eau peut être totalement éliminée pour une commercialisation des dalles et un usage différé, à la manière d'un matériau de construction. Le liant est choisi pour imposer la formation de mottes dont l'encombrement est supérieur aux espaces libres entre les fibres du tissus, quel que soit le degré d'humidité, afin de permettre le maintien par le tissus de ces mottes qui enterrent les fibres du tissus.

Un tel liant n'a pas les contraintes de durabilité d'une colle pour l'application envisagée et l'invention n'est pas limitée au type de terreau mentionné sous le nom « Preforma », en effet, le développement du système de racines des plantes en utilisation soumise à la pluie et au vent prend le relais du liant au fil du temps, pour agréger le terreau lié et limiter les effets du phénomène de craquèlement. De même les tiges et feuilles des végétaux en croissance, empêchent aussi progressivement l'arrosage direct du terreau, limitant le phénomène de ravinement. Les caractéristiques du liant peuvent donc être sélectionnées dans des colles existantes possédant un fort gonflement avec l'eau, une première solubilité dans l'eau et une première polymérisation la plus parfaite possible par élimination de l'eau, notamment par écoulement ou évaporation, une non-toxicité générale vis-à-vis des plantes et une résistance à l'eau après polymérisation de l'ordre de la durée de croissance des racines des végétaux à planter ultérieurement dans le terreau.

Une concentration de 1% à 2% en poids de bitume dans le poids total du mélange du bitume avec le terreau est en général adaptée pour obtenir l'effet de l'invention. Mais cette concentration peut être adaptée expérimentalement en fonction du tissu disponible, du terreau utilisé et du liant sélectionné. Une concentration satisfaisante en liant pour un tissus donné peut en effet être déterminée en observant la distance entre les craquelures du terreau mélangé au liant, après séchage, en mesurant la taille des espaces libres entre les fibres du tissus et en sélectionnant une concentration en liant qui donne une distance minimale entre craquelures, supérieure à la dimension moyenne des espaces libres. Lorsque les craquelures ne forment pas des courbes fermées en mottes, la concentration en liant peut aussi être déterminée en sélectionnant une concentration de liant donnant une longueur de craquelure plus grande que les espaces libres entre les fibres. Dans ces cas particuliers, la taille de la motte est bien supérieure aux espaces libres entre fibres et la concentration en liant peut être optimisée sur d'autres critères, comme la vitesse de pénétration du terreau et du liant dans le tissus. Lorsque la taille des mottes est comparable à l'espace libre entre les fibres du tissu, il est possible de choisir de changer le tissu pour des fibres plus serrées ou de faire varier la concentration en liant pour augmenter la taille minimale des mottes.

La toile de l'invention est choisie inextensible, pour éviter le craquèlement supplémentaire des mottes qui surviendrait par extension du tissu qu'elles remplissent. La toile est de plus préférentiellement poreuse et munie de trous. La porosité de la toile ou la présence de trous dans la toile peuvent être envisagées séparément pour la réalisation de l'invention, leur utilisation simultanée est toutefois préférable pour permettre à la fois une certaine rétention d'eau par l'ajustement de la porosité de la toile et une évacuation de l'air par les trous de cette toile lors de l'introduction du terreau mélangé au liant, sous forme de boue liquéfiée, dans le tissus.

Dans ce contexte , un procédé de réalisation de l'invention est , par exemple, constitué des étapes suivantes : coller le tissus sur la toile, mélanger le terreau au liant non polymérisé et à de l'eau pour obtenir une boue liquide, disposer la toile sur un support permettant l'évacuation de l'eau et de l'air par les trous de la toile, la toile séparant le tissus du support, déposer par gravité la boue sur le tissus, le tissus séparant l'arrivée de boue de la toile, alimenter en boue jusqu'à avoir chassé l'air du tissus par les trous et la porosité de la toile, laisser sécher le terreau avec le liant dans les interstices ou espaces libres du tissus.

Dans une réalisation industrielle de dalles de terreau selon l'invention et de grande longueur, une buse dépose le terreau et le liant en solution aqueuse, sous forme de boue, sur une bande de tissus encollé sur une toile défilant sous la buse. Dans ce cas, la présence de trous dans la toile permet d'obtenir le remplissage complet du tissus pour une vitesse de défilement plus rapide du tissus devant la buse, à viscosité et fluidité de boue données, qu'en l'absence de trous. La présence de trous est donc un avantage pour le procédé de réalisation de l'invention.

Des dalles selon l'invention sont adaptées à la réalisation de murs de végétaux sur des supports d'inclinaisons diverses, par fixation des dalles sur les supports et culture de végétaux insérés dans les dalles.

L'invention est susceptible d'application industrielle dans le domaine de la réalisation de murs végétaux ou de toitures végétales inclinées ou horizontales.

## Revendications

1. Dalle de terreau pour la réalisation de murs végétaux ou de toitures végétalisées **caractérisée en ce qu'**elle comprend une toile inextensible, munie de moyens pour la rendre perméable à l'eau et à l'air, un tissus extensible constitué de fibres, espacées entre elles, un terreau, apte à faire croître des végétaux, **en ce que** le tissus est collé sur une face de la toile, **en ce que** les espaces entre les fibres sont remplis avec le terreau et **en ce qu'**un liant apte à permettre la formation de mottes de terreau, d'encombrement supérieur aux espaces entre les fibres , est mélangé au terreau

2. Dalle selon la revendication 1) dans laquelle le liant est un bitume

3. Dalle selon la revendication 1) dans laquelle le liant est un caoutchouc

4. Dalle selon la revendication 1) dans laquelle le liant est une gélatine animale

5. Dalle selon l'une quelconque des revendications 1) à 4) dans laquelle les moyens pour rendre la toile perméable à l'eau et à l'air sont constitués par la porosité de la toile

6. Dalle selon l'une quelconque des revendications 1) à 4) dans laquelle les moyens pour rendre la toile perméable à l'eau et à l'air sont constitués par au moins un trou percé dans la toile

7. Procédé de réalisation d'une dalle de terreau selon l'une quelconque des revendications 1) à 6) **caractérisé en ce qu'**il comprend les étapes suivantes : mélanger du terreau à de l'eau et à un liant soluble dans l'eau et polymérisable par élimination de l'eau, pour obtenir une boue, déposer la boue obtenue sur un tissus de fibres espacées entre elles et collées sur une face d'une toile perméable à l'eau et à l'air, le tissus étant situé entre l'arrivée de la boue et la toile, laisser la boue envahir les espaces entre les fibres et éliminer l'air et l'eau, pour obtenir un terreau lié en mottes d'encombrement supérieur aux espaces entre les fibres.

8. Application de la dalle de terreau selon l'une quelconque des revendications 1) à 6), obtenue selon la revendication 7), à la réalisation de murs végétaux sur un support incliné de type toiture, par fixation de la dalle sur le support et par culture de végétaux insérés dans la dalle.

## Claims

1. Slab of potting compost for the manufacturing of green walls or green roofs, **characterized in that** it comprises an inelastic sheet including means for making it permeable to water and air, an extensible fabric made of of fibers, spaced apart, potting compost, capable of making plants grow, **in that** the fabric is glued to a surface of the sheet, **in that** the spaces between the fibers are filled with the potting compost, and **in that** a binder that can allow the formation of rootballs of potting compost, of a size that is larger than the spaces between the fibers, is mixed with the potting compost.

2. Slab according to claim 1, wherein the binder is a bitumen.

3. Slab according to claim 1, wherein the binder is rubber.

4. Slab according to claim 1, wherein the binder is an animal gelatin.

5. Slab according to anyone of claims 1 to 4, wherein the means for making the sheet permeable to water and to air are the porosity of the sheet.

6. Slab according to anyone of claims 1 to 4, wherein the means for making the sheet permeable to water and to air are at least one hole that is pierced in the sheet.

7. Process for the manufacturing of a slab of potting compost according to anyone of claims 1 to 6, **characterized in that** it comprises the following steps: mixing the potting compost with water and with a binder that is water-soluble and polymerizable by elimination of water to obtain a mud, depositing the mud that is obtained on a fabric of fibers that are spaced apart and glued to the surface of a sheet that is permeable to water and to air, wherein the fabric is located between the intake of the mud and the sheet, allowing the mud to invade the spaces between the fibers and to eliminate the air and water to obtain potting compost that is bonded in rootballs of a size that is larger than the spaces between the fibers.

8. Use of the slab of potting compost according to anyone of claims 1 to 6, obtained according to 7, for the manufacturing of green walls on a roof-type pitched substrate, by attaching the slab to the substrate and by cultivating plants that are inserted into the slab.

## Patentansprüche

1. Platte aus Komposterde für die Herstellung von Pflanzenmauern oder Pflanzendachen, **dadurch gekennzeichnet, daß** sie aus einem nicht dehnbaren Tuch besteht, enthaltend Mitteln um den Tuch wasserdurchlässig und luftdurchlässig zu machen, einem dehnbaren Stoff aus Fasern zusammengesetzt, Fasern die auseinander gerückt sind, einer Komposterde dazu fähig ist, Pflanzen zu begrünen, daß das Stoff auf eine Seite des Tuchs geklebt ist, daß die Abstanden zwischen die Fasern mit der Komposterde gefüllt sind und daß ein Bindemittel, das ist dazu fähig, die Bildung von Komposterdsode zu erlauben, mit der Komposterde vermischt ist.

2. Platte gemäß Anspruch 1, wobei das Bindemittel ein Bitumen ist.

3. Platte gemäß Anspruch 1, wobei das Bindemittel einen Gummi ist.

4. Platte gemäß Anspruch 1, wobei das Bindemittel eine Tiergelatine ist.

5. Platte gemäß einem beliebigen der Ansprüche 1) bis 4), wobei die Mitteln, um dem Tuch wasserdurchlässig und luftdurchlässig zu machen, sich aus der Porosität dem Tuch zusammengesetzt sind.

6. Platte gemäß einem beliebigen der Ansprüche 1) bis 4), wobei die Mitteln, um dem Tuch wasserdurchlässig und luftdurchlässig zu machen, sich aus mindesten einem Loch durchbohrt in der Tuch zusammengesetzt sind.

7. Verfahren für Ausführung einer Platte aus Komposterde gemäß einem beliebigen der Ansprüche 1 bis 6, **dadurch gekennzeichnet, daß** es die folgenden Etappen enthalt : Komposterde mit Wasser und mit einem wasserlöslich Bindemittle das bei Wasserbeseitigung polymerisiert vermischen, um eine Schlamm zu erhalten, ablegen die Schlamm über ein Stoff aus Fasern zusammengesetzt, Fasern die auseinander gerückt sind und die auf das wasserdurchlässig und luftdurchlässig Tuch geklebt sind, das Stoff liegend zwischen die Zufuhr der Schlamm und das Tuch, lassen die Schlamm die Abständen zwischen die Fasern überschwemmen und ausmerzen Luft und Wasser um eine Komposterde zu erhalten, Komposterde die in Klumpen mit einem Platzbedarf grösser als die Abständen zwischen die Fasern gebunden ist.

8. Anwendung der Platte aus Komposterde gemäß einem beliebigen der Ansprüche 1 bis 6, erhaltet gemäß Anspruch 7, für die Ausführung von Pflanzenmauern über ein geneigt Dachträger, bei dem Befestigen der Platte auf dem Träger und bei dem Anbau von Pflanzen in der Platte eingefügt.
